# EUROPEAN PATENT APPLICATION

(11) **EP 3 670 348 A1**
(43) Date of publication of application: **24.06.2020**
(21) Application number: 18214380.0
(22) Date of filing: 20.12.2018
(51) Int. Cl.: B64D 27/24, B64D 27/02

(54) **DEVICE FOR PROVIDING POWER OR THRUST TO AN AEROSPACE VEHICLE AND METHOD FOR CONTROLLING A DEVICE FOR PROVIDING POWER TO AN AEROSPACE VEHICLE**

(71) Applicant: Airbus Defence and Space GmbH, 82024 Taufkirchen (DE)
(72) Inventor: HOSAEUS, Herwig, 82024 Taufkirchen (DE); HOFMANN, Michael, 82024 Taufkirchen (DE); COOPER, Michael, 82024 Taufkirchen (DE)
(74) Representative: LKGLOBAL Lorenz & Kopf PartG mbB Patentanwälte

(57) **Abstract**

The invention relates to a device for providing power or thrust to an aerospace vehicle (46) with a control system (14) that provides at least two different mechanical power outputs deriving their power from one common mechanical power source unit, the device (10) comprising: a common mechanical power source unit (16) being configured to provide mechanical power, at least one adjustable mechanical load unit (24) being driven by the common mechanical power source unit, an electrical machine unit (20) with a mechanical power interface (21) being also connected to the common mechanical power source unit, wherein the electrical machine unit is configured to receive mechanical power from the common mechanical power source unit to provide electrical power at an electrical power interface (18) to the aerospace vehicle, and a control system (14) being configured to receive a mechanical power or thrust demand and standard air data from the aerospace vehicle, wherein, only based on the mechanical power or thrust demand and standard air data, the control system is further configured to control the common mechanical power source unit, the electrical machine unit and the at least one adjustable mechanical load unit to provide mechanical power or thrust as well as electrical power to the aerospace vehicle. Since the control system of the device provides control of the power sources, traffic between the vehicle and the mechanical power unit, the electrical machine and the adjustable mechanical load can be reduced. This is particularly an advantage for aerospace vehicles which comprise low bandwidth structures like CAN busses. Furthermore, this generates less calculation load on an avionics computer. Since the device is independent from the vehicle controller, the device may be replaced, easily. Furthermore, that independence results in reduced maintenance costs.

## Description

The invention relates to a device for providing power or thrust to an aerospace vehicle and a method for controlling a device for providing power to an aerospace vehicle.

Vehicles, for example aerospace vehicles, comprise propulsion systems. Those propulsion systems may e. g. be propellers which may define a mechanical load. Furthermore, those vehicles comprise devices which require electrical power. That electrical power may e. g. be provided by batteries or generators or a combination thereof. The electrical power system may be driven by a power source which also drives the mechanical loads. A system which combines a generator with an internal combustion engine is a so called genset system.

WO 2015/138217 A1 describes a genset system in an unmanned aerial vehicle. However, that genset system is ineffective.

Thus, there is the need for providing an improved device for providing power or thrust to an aerospace vehicle.

The object is solved by the features of the independent claims. Advantageous embodiments are subject matter of the dependent claims and the following description.

According to the invention, a device for providing power or thrust to an aerospace vehicle with a control system that provides at least two different mechanical power outputs deriving their power from one common mechanical power source is provided, the device comprising: a common mechanical power source unit being configured to provide mechanical power, at least one adjustable mechanical load unit being driven by the common mechanical power source unit, an electrical machine unit with a mechanical power interface being also connected to the common mechanical power source unit, wherein the electrical machine unit is configured to receive mechanical power from the common mechanical power source unit to provide electrical power at an electrical power interface to the aircraft, and a control system being configured to receive a mechanical power or thrust demand and standard air data from the aerospace vehicle, wherein, only based on the mechanical power or thrust demand and standard air data, the control system is further configured to control the common mechanical power source unit, the electrical machine unit and the at least one adjustable mechanical load unit to provide mechanical power or thrust as well as electrical power to the aerospace vehicle.

The device for providing power or thrust to an aerospace vehicle provides mechanical power from a mechanical power source to an adjustable mechanical load. Furthermore, the device provides electrical power by the electrical machine. The control system controls the mechanical power unit, the electrical machine and the adjustable mechanical load. Thus, the electrical machine can optimize the fuel consumption for each operating point by adjusting the adjustable mechanical load. The adjustment is performed by only receiving mechanical power or thrust demand and standard air data from the aerospace vehicle. No further data is required for optimizing the fuel consumption and determining the operating point. If, for example, the adjustable mechanical load is a propeller, the adjustment may be performed by varying pitch and speed of the propeller. Since the control system of the device provides control of the power sources, traffic between the vehicle and the common mechanical power unit, the electrical machine and the adjustable mechanical load can be reduced. This particularly an advantage for aerospace vehicles which comprise low bandwidth structures like CAN busses. Furthermore, the device generates less calculation load on an avionics computer. Since the device is independent from the vehicle controller, i. e. the avionics computer, the device may be easily replaced. Furthermore, that results in reduced maintenance costs.

In an example, electrical power may be for electric consumers and/or batteries.

In another example, one or more shafts may connect the common mechanical power source unit with the at least one adjustable mechanical load unit and the electrical machine unit.

In a further example, the common mechanical power source unit may be a combustion engine.

Furthermore, in an example, the electrical machine unit may be a generator or starter/generator. The electrical machine further comprises an inverter interface being configured to provide and receive electrical power.

In another example, the at least one adjustable mechanical load unit may e.g. be a variable pitch propeller, a compressor with variable guide vanes, a hydraulic pressure pump etc.

According to an example, the common mechanical power source unit comprises at least two mechanical power interfaces, wherein one of the at least two mechanical power interfaces is connected to the at least one adjustable mechanical load unit and a further one of the at least two mechanical power interfaces is connected to the electrical machine, wherein the at least one adjustable mechanical power interface is defined as a master mechanical power interface and the further of the at least two mechanical power interfaces is defined as slave mechanical power interface, wherein an output of the master mechanical power interface directly follows an aircraft's power or thrust demand and an output of the slave mechanical power interface is based on a remaining mechanical power of the common mechanical power source unit, wherein the common mechanical power source unit is configured to allocate variable portions of the mechanical power to the at least two mechanical power interfaces.

In an example, a mechanical interface may provide and receive mechanical power. The common mechanical power source unit is configured to distribute mechanical power to the mechanical power interfaces, wherein the recipients of the power are the at least one adjustable mechanical load unit and the electrical machine unit.

According to a further example, the control system is configured to control the common mechanical power source unit based on a total power demand of the at least one adjustable mechanical load unit and the electric machine unit.

Furthermore, according to another example, the common mechanical power source unit is driven by a fuel, wherein the control system is configured to control at least two parameter values of the at least one adjustable mechanical load unit, as well as the electric machine unit based on a total fuel consumption of the common mechanical power source unit in a way that the fuel consumption is minimized and an efficiency of the at least one adjustable mechanical load unit is maximized.

In an example, the at least two parameters may e.g. be propeller pitch and speed.

According to an example, the device comprises at least two load units, wherein the control system is configured to detect a resonant interaction between the at least two load units or between at least one load unit and the common mechanical power source unit and, if a resonant interaction is detected, to adjust at least one parameter value of one of the at least two load units such that the resonant interaction is terminated.

In an example, the load units may be of mechanical or electrical type or mixed. Furthermore, in an example, load units can be different.

According to an example, the control system is configured to provide a signal comprising information about a difference between a maximum available power of the common mechanical power source unit and a current power consumption of the at least one adjustable mechanical load unit and the load of the electric machine unit.

According to another example, the control system is configured to receive a power or thrust demand value and standard air data from the aerospace vehicle, wherein the control system is further configured to specify the characteristics of the common mechanical power source unit according to standard air data and to set the load value for the mechanical load unit based on mechanical power or thrust demand and the electrical power demand value.

According to a further example, the control system is configured to send a total power reserve value to the aerospace vehicle.

In an example, the control system calculates the difference between the maximum power of the common mechanical power source unit and the sum of a current power of the at least one adjustable mechanical load unit and the mechanical power of the electrical machine unit.

According to an example, the control system is configured to control the voltage and the current of the electrical machine unit.

In an example, depending on inputs from batteries or the maximum allowed electrical power the control system calculates the control signals for the inverter of the electrical machine unit to control the voltage and current of the electrical machine.

According to an example, the control system is configured to control the cooling system for the common mechanical power source unit and the electrical machine unit including an inverter of the electrical machine unit.

According to the invention, also a method for controlling a device for providing power to an aerospace vehicle according to the above description is provided, the method comprising the following steps: receiving a mechanical power or thrust value from a control system of an aerospace vehicle using a control system, calculating an operating point with the least fuel consumption of the common mechanical power source unit, calculating the operating point with the highest total efficiency of the propeller and motor for a certain power or thrust demand.

The effects and further embodiments of the method may be derived from the above description of the device.

According to the invention, also an aerospace vehicle is provided, the aerospace vehicle comprising: an avionic control system that provides a mechanical power or thrust value and a device according to the above description.

The effects and further embodiments of an aerospace vehicle according to the present invention are analogous to the effects and embodiments of the description mentioned above.

In an example, the device is a modular component of the aerospace vehicle.

In further example, the aerospace vehicle comprises an electrical power storage which is electrically connected to a DC link of the electrical machine unit.

In the following the invention is described by the means of an exemplary embodiment using the attached drawing.
- Fig. 1: shows a schematic drawing of an aerospace vehicle comprising the device;
- Fig. 2: shows a schematic drawing of the device;
- Fig. 3: shows a schematic diagram of the output power vs. the revolutions per minute of the mechanical power source unit;
- Fig. 4: shows a schematic diagram of the torque vs. the revolutions per minute of the mechanical power source unit; and
- Fig. 5: shows a flowchart of the method.

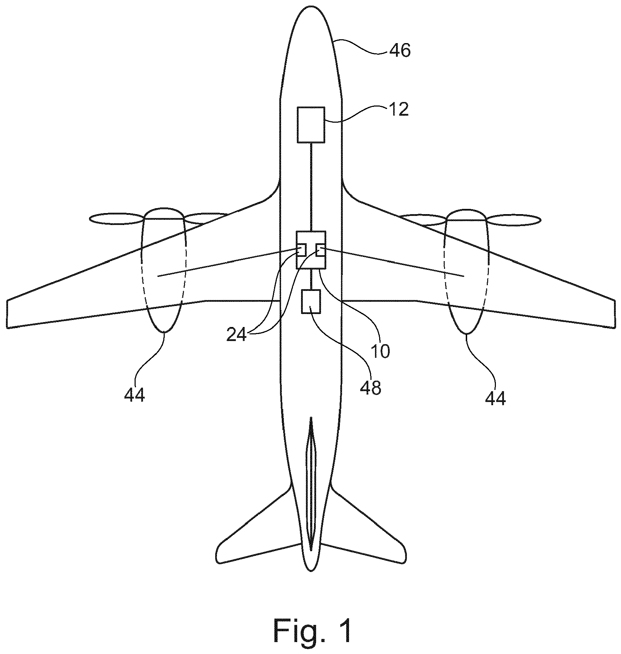

Fig. 1 shows a schematic drawing of an aerospace vehicle 46. In this exemplary embodiment, the aerospace vehicle 46 is an aircraft, which may be an unmanned aerial vehicle.

The aerospace vehicle 46 comprises a computer system 12 which, if the aerospace vehicle 46 is airborne, measures the speed of the aerospace vehicle 46 and computes the respective thrust, taking the aerodynamics of the aerospace vehicle 46 into account. The computer system 12 may be a main avionic computer.

The aerospace vehicle 46 further comprises a device 10 for providing power or thrust to an aerospace vehicle. The device 10 may be a black box system being independent from the aerospace vehicle 46 and its computer system 12, i.e. the device 10 may be modular, such that it can be introduced and removed independently from the computer system 12 of the aerospace vehicle 46. The device 10 may provide mechanical power to the propulsion system 44 of the aerospace vehicle 46 and electrical power to at least one electrical load 48 of the aerospace wiki 46. The computer system 12 may be an electrical load 48.

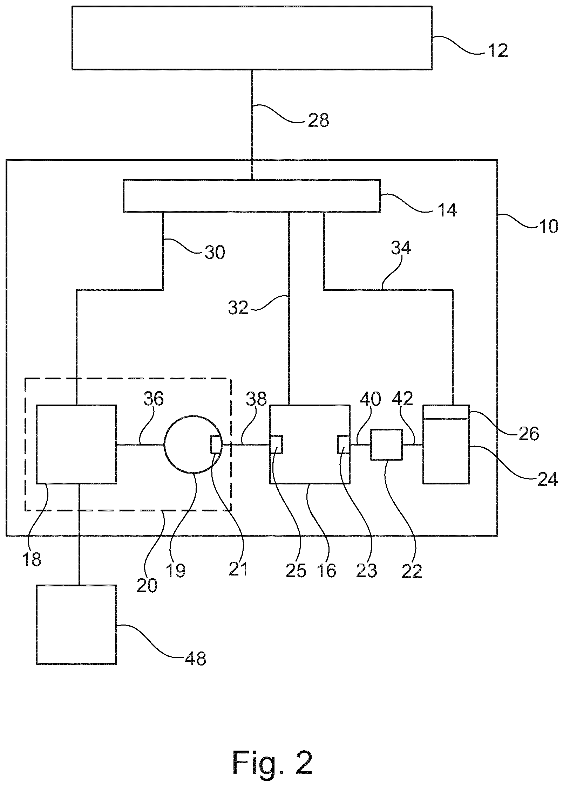

According to fig. 2, the device 10 comprises a control system 14, a common mechanical power source unit 16, which may be a combustion engine, an electrical machine 20, which may be a generator/electro motor, and at least one adjustable mechanical load unit 24 which may be connected to the propulsion system 44.

The common mechanical power source unit 16 is configured to provide mechanical power. The mechanical power may be provided by at least two different mechanical power outputs or interfaces, respectively, which derive the power from the common mechanical power source unit 16.

The common mechanical power source unit 16 drives the at least one adjustable mechanical load unit 24 via a first mechanical power interface 23. A gearbox 22 may be in between the common mechanical power source unit 16 and the at least one adjustable mechanical load unit 24. The gearbox 22 may shift the revolutions per minute being provided by the common mechanical power source unit 16 to an amount which suits the adjustable mechanical load unit 24. The ratio of the revolutions per minute provided by the common mechanical power source unit 16 and the revolutions per minute being provided by the gear box 22 to the adjustable mechanical load unit 24 is the gear box ratio. The common mechanical power source unit 16 may be configured to provide mechanical power and/or thrust to the adjustable mechanical load unit 24.

The at least one adjustable mechanical load unit 24 may be adjusted by an adjustment element 26. If, e.g., the at least one adjustable mechanical load unit 24 is a propeller, the adjustment element 26 may be a pitch actuator which actuates the pitch of the rotor blades of the propeller. The pitch actuation results in an adjustability of the mechanical load unit 24.

The electrical machine 20 comprises generator power electronics 18, a starter/generator 19, and a mechanical power interface 21 which is connected to the common mechanical power source unit 16 via a second mechanical power interface 25. The starter/generator 19 may provide electrical power, i.e. an AC voltage, to power electronics 18. The power electronics 18 may convert the AC voltage in the DC voltage and provide the electrical power to the electrical load units 48 of the aerospace vehicle 46.

The control system 14 controls the common mechanical power source unit 16, the electrical machine unit 20 and the at least one adjustable mechanical load unit 24 to provide mechanical power or thrust as well as electrical power to the aerospace vehicle 46. The control system 14 receives a mechanical power or thrust demand and standard air data from the aerospace vehicle 46. Standard air data may for example be air temperature, air pressure, and/or air density. The control of the common mechanical power source unit 16, the electrical machine unit 20 and the at least one adjustable mechanical load unit 24 is based on the mechanical power or thrust demand.

For example, the control system 14 receives a thrust command from the computer system 12. The control system 14 determines a propeller speed of the propulsion system 44 and a pitch with the highest efficiency, while delivering the commanded thrust. Now the control system 14 determines the load torque for this pitch angle using data on the propeller characteristics. Then the control system 14 calculates the torque and speed at the first mechanical power interface 23, which may be an engine output shaft, using the gear box ratio. By including the generator torque, the control system 14 calculates the total torque on the first mechanical power interface 23.

Next, the control system 14 uses an optimizer to compute an operating point for the propeller speed and the pitch angle which corresponds to maximum efficiency, wherein, while delivering the required thrust, the maximum efficiency is derived from the total efficiency being common mechanical power source unit efficiency times propulsion system efficiency.

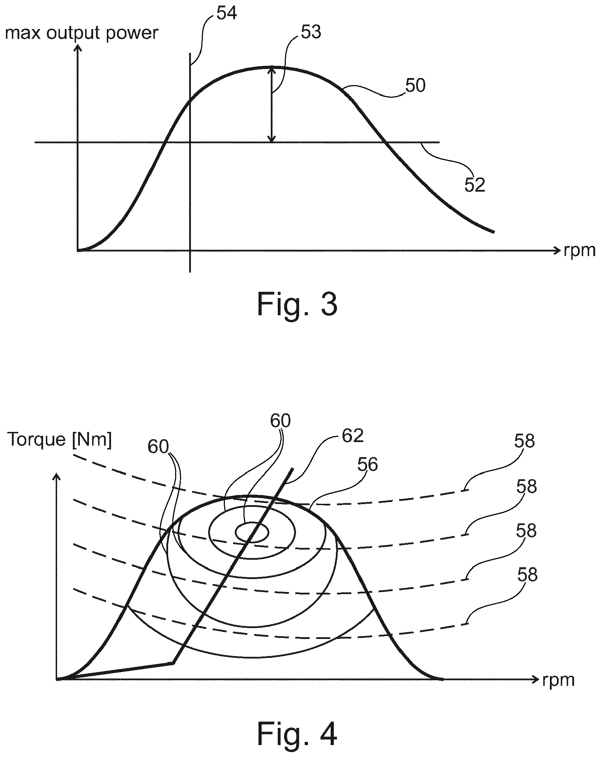

The control system 14 calculates the available power for the electrical machine 20 as maximum mechanical power of the common mechanical power source unit 16 minus the power delivered to the at least one adjustable mechanical load 24. This available power is used to provide a limitation value to the active power electronics connected to the output of the electrical machine 20. The maximum power may be calculated by using a diagram 50 relating the maximum output power to the revolutions per minute of the common mechanical power source unit 16. An example of such a diagram is shown in figure 3. The line 52 shows the current power draw. The line 54 shows the current revolutions per minute. The double arrow 53 shows the maximum power reserve which may be provided as available power for the electrical machine 20.

The control system 14 manages a fuel injection to the common mechanical power source unit 16 to assure that the common mechanical power source unit 16 delivers the required power to the propulsion system 44 and the electrical machine 20 while assuring that limits of the common mechanical power source unit 16, e.g. maximum torque, engine speed, turbocharger speed and exhaust gas temperature, are not exceeded. The control system 14 comprises all the required interfaces to control and monitor the common mechanical power source unit 16 throughout operation.

To avoid a resonant interaction between the common mechanical power source unit 16 and controllers of the electrical machine 20, the torque ramp of the electrical machine 20 must be limited to a value lower than the maximum torque ramp of the common mechanical power source unit 16. If needed, the controls of the common mechanical power source unit 16 and the electrical machine 20 can interact via the control system 14.

If the device 10 is a genset system, and the computer system 12 is an avionics system, then the computer system 12 may determine the aircraft speed and calculate the required thrust.

The control system 14 controls the voltage and current of the electrical machine 20 depending on inputs from e. g. batteries, i.e. max allowed electrical power e.g. for charging. Furthermore, the control system 14 controls a pitch of a propeller being the adjustable mechanical load 24. The control system 14 may further control a cooling system of the aerospace vehicle 46.

The control system 14 may also control the common mechanical power source unit 16. The control system 14 calculates the operating point with the least fuel consumption (SFC) of the common mechanical power source unit 16. The calculation may be performed by using a diagram providing the relation between the torque and the revolutions per minute of the common mechanical power source unit 16 as exemplary shown in figure 3. The diagram shows the torque characteristic 56 of a common mechanical power source unit 16. Furthermore, figure 4 comprises power-constant curves 58, SFC-constant curves 60 and a curve 62 showing the optimal SFC per watt.

Furthermore, the control system 14 calculates the operating point with the highest total efficiency of the propeller and motor for a certain thrust demand plus electric power needs.

To optimise the control across the full range of mechanical power demand which depends on the flight phase, the control needs to be done in a feedback loop.

In such a control loop the mechanical power available from the common mechanical power source unit 16 is shared between the power for the first mechanical interface 23 and the mechanical power for the second mechanical interface 25. This leads to a floating power control where the computer system 12 is the master which defines the power needed for the flight. The remaining power is the maximum power available for the electrical machine 20.

This creates an opportunity to optimise of the control of the common mechanical power source unit 16 with a constraint on the mechanical power required by the propulsion system 44. The power is floating dynamically between the first mechanical interface 23 and the second mechanical interface 25 depending on the flight phase and off-take power needs.

By having a defined and universal interface between the aerospace vehicle 46 and device 10, all commands and calculations related to the aerospace vehicle 46 shall be done by computer system 12. All commands and calculations for control of the device 10 shall be done by the control system 10.

With this clear separation of functions, the device 10 can be seen as a black box and replaced easily with another version of the device 10 if it fulfils these universal interface requirements. The computer system 12 on the aerospace vehicle 46 does not need to be re-qualified if there is a need to change the components or functions on the device 10.

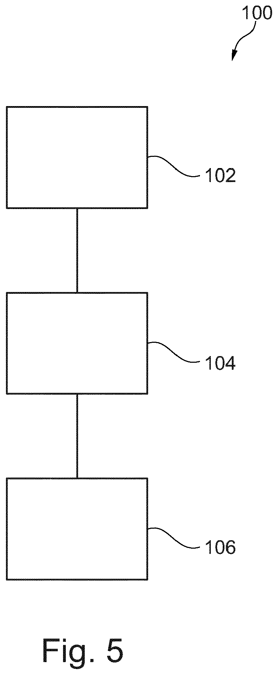

Figure 5 shows a flowchart of the method 100 for controlling a device for providing power to an aerospace vehicle. In a first step 102 the mechanical power or thrust value from a control system of an aerospace vehicle is received by using a control system.

In a second step 104, an operating point with the least fuel consumption of the common mechanical power source unit is calculated. This may be performed by the control system.

In a third step, an operating point with the highest total efficiency of the propeller and motor for a certain power or thrust demand is calculated. This may be performed by the control system, too.

## Claims

1. Device for providing power or thrust to an aerospace vehicle (46) with a control system (14) that provides at least two different mechanical power outputs deriving their power from one common mechanical power source, the device (10) comprising:
a common mechanical power source unit (16) being configured to provide mechanical power,
at least one adjustable mechanical load unit (24) being driven by the common mechanical power source unit,
an electrical machine unit (20) with a mechanical power interface (21) being also connected to the common mechanical power source unit,
wherein the electrical machine unit is configured to receive mechanical power from the common mechanical power source unit to provide electrical power at an electrical power interface (18) to the aircraft, and
a control system (14) being configured to receive a mechanical power or thrust demand and standard air data from the aerospace vehicle,
wherein, only based on the mechanical power or thrust demand and standard air data, the control system is further configured to control the common mechanical power source unit, the electrical machine unit and the at least one adjustable mechanical load unit to provide mechanical power or thrust as well as electrical power to the aerospace vehicle.

2. Device according to claim 1, wherein the common mechanical power source unit comprises at least two mechanical power interfaces (23, 25),
wherein one of the at least two mechanical power interfaces is connected to the at least one adjustable mechanical load unit and a further one of the at least two mechanical power interfaces is connected to the electrical machine,
wherein the at least one adjustable mechanical power interface is defined as a master mechanical power interface and the further of the at least two mechanical power interfaces is defined as slave mechanical power interface,
wherein an output of the master mechanical power interface directly follows an aircraft's power or thrust demand and an output of the slave mechanical power interface is based on a remaining mechanical power of the common mechanical power source unit,
wherein the common mechanical power source unit is configured to allocate variable portions of the mechanical power to the at least two mechanical power interfaces.

3. Device according to claim 1 or 2, wherein the control system is configured to control the common mechanical power source unit based on a total power demand of the at least one adjustable mechanical load unit and the electric machine unit.

4. Device according to one of claims 1 to 3, wherein the common mechanical power source unit is driven by a fuel, wherein the control system is configured to control at least two parameter values of the at least one adjustable mechanical load unit, as well as the electric machine unit based on a total fuel consumption of the common mechanical power source unit in a way that the fuel consumption is minimized and an efficiency of the at least one adjustable mechanical load unit is maximized.

5. Device according to one of claims 1 to 4, wherein the device comprises at least two load units, wherein the control system is configured to detect a resonant interaction between the at least two load units or between at least one load unit and the common mechanical power source unit and, if a resonant interaction is detected, to adjust at least one parameter value of one of the at least two load units such that the resonant interaction is terminated.

6. Device according to one of claims 1 to 5, wherein the control system is configured to provide a signal comprising information about a difference between a maximum available power of the common mechanical power source unit and a current power consumption of the at least one adjustable mechanical load unit and the load of the electric machine unit.

7. Device according to one of claims 1 to 6, wherein the control system is configured to receive a power or thrust demand value and standard air data from the aerospace vehicle, wherein the control system is further configured to specify the characteristics of the common mechanical power source unit according to standard air data and to set the load value for the mechanical load unit based on mechanical power or thrust demand and the electrical power demand value.

8. Device according to one of claims 1 to 7, wherein the control system is configured to send a total power reserve value to the aerospace vehicle.

9. Device according to one of claims 1 to 8, wherein the control system is configured to control the voltage and the current of the electrical machine unit.

10. Device according to one of claims 1 to 9, wherein the control system is configured to control the cooling system for the common mechanical power source unit and the electrical machine unit including an inverter of the electrical machine unit.

11. Method for controlling a device for providing power to an aerospace vehicle according to one of the preceding claims, the method (100) comprising the following steps:
- receiving (102) a mechanical power or thrust value from a control system of an aerospace vehicle using a control system,
- calculating (104) an operating point with the least fuel consumption of the common mechanical power source unit,
- calculating (106) the operating point with the highest total efficiency of the propeller and motor for a certain power or thrust demand.

12. Aerospace vehicle (46) comprising:
an avionic control system (12) that provides a mechanical power or thrust value and
a device according to one of claims 1 to 10.

13. Aerospace vehicle according to claim 12, wherein the device is a modular component of the aerospace vehicle.

14. Aerospace vehicle according to claim 12 or 13, wherein the aerospace vehicle comprises an electrical power storage which is electrically connected to a DC link of the electrical machine unit.
